# EUROPÄISCHE PATENTANMELDUNG

(11) **EP 2 693 203 A1**
(43) Veröffentlichungstag der Anmeldung: **05.02.2014**
(21) Anmeldenummer: 12005546.2
(22) Anmeldetag: 31.07.2012
(51) Int. Cl.: G01N 21/84, G01N 21/47, G01N 21/31, G01N 11/00, B29C 35/08, B29C 35/02

(54) **Verfahren zum berührungslosen Bestimmen einer Eigenschaft eines Gegenstands**

(71) Anmelder: QIAGEN Lake Constance GmbH, 78333 Stockach (DE)
(72) Erfinder: Feuerbacher, Elmar Christian, 78333 Stockach (DE)
(74) Vertreter: Hössle Patentanwälte Partnerschaft

(57) **Zusammenfassung**

Es werden ein Verfahren und eine Messeinrichtung (300) zum berührungslosen Bestimmen einer Eigenschaft eines Gegenstands (102), insbesondere eine Probe oder Schicht (102) auf einem Substrat (104), vorgestellt. Dabei wird Laserlicht (106) auf den Gegenstand (102) projiziert und durch das Laserlicht (106) erzeugtes Licht über einen Strahlteiler (100) räumlich selektiv erfasst.

## Beschreibung

Die Erfindung betrifft ein Verfahren zum berührungslosen Bestimmen einer Eigenschaft eines Gegenstands und eine Messeinrichtung zur Durchführung des Verfahrens.

Das vorgestellte Verfahren soll anwendbar sein, wenn das Streuverhalten eines Gegenstands auf eine interessierende Eigenschaft schließen lässt. Dabei können sowohl Oberflächeneigenschaften als auch Eigenschaften des Volumens des Gegenstands bestimmt werden. Damit sollen auch gezielt bestimmte Schichten in dem Gegenstand untersucht werden können.

Das berührungslose Bestimmen soll dabei ermöglichen, ohne negative Einwirkung auf den Gegenstand, die interessierende Eigenschaft zu bestimmen.

Ein solches Verfahren soll bspw. bei der Härtungsprüfung einer Beschichtung eingesetzt werden.

Die Bedruckung und Beschichtung von Oberflächen sind weitverbreitete Verfahren zum Schutz und zur Gestaltung von Oberflächen, insbesondere auch im industriellen Bereich. Dabei führen Umweltschutzauflagen und Qualitätsanforderungen vermehrt zum Einsatz von Einkomponenten-Systemen.

Daneben ist zu berücksichtigen, dass die Forderungen an Qualität und Durchsatz von Druck- und Lackieranlagen stetig wachsen. Daraus resultieren hohe Prozessgeschwindigkeiten, die nur noch kurze Bestrahlungszeiten von wenigen Sekunden für die Trocknung bzw. Vernetzung von Farben bzw. Lacken erlauben. Dabei muss, abhängig von der Anwendung, ein Trocknungsgrad zwischen 60 % und 90 % sichergestellt werden, damit Staubeinschlüsse vermieden und Folgeprozesse, wie z. B. der nächste Farbauftrag, gestartet werden können. Bekannte eingesetzte lösemittelhaltige Farben und Lacke stoßen bei diesen Bedingungen aufgrund der unzureichenden Kontrollierbarkeit des Trocknungsprozesses und steigenden Umweltauflagen an ihre Grenzen. Stattdessen werden zunehmend lösemittelfreie, thermisch- und UV-härtende Lacke und Farben eingesetzt.

Ein weiteres Problem besteht darin, dass die Durchhärtung von Farben und Lacken nur mit hohem Aufwand kontrollierbar ist. Derzeit erfolgt die Überwachung der Trocknung bzw. Vernetzung von Farben und Lacken in industriellen Druck- und Lackierprozessen durch regelmäßige manuelle Entnahme von Proben direkt aus dem Produktionsprozess und anschlie-βende Analyse im Labor. Zur Gewährung der geforderten Oberflächenqualität müssen regelmäßig Parameter, wie bspw. der Oberflächenvernetzungsgrad, sowie die für Elastizität und Haftung der Farb- bzw. Lackschicht ausschlaggebende Tiefenhärtung manuell geprüft werden. Weitere im Labor zu untersuchende Parameter sind die Lackhärte, bspw. die sogenannte Bleistifthärte, Pendelhärte nach König, die Abriebfestigkeit nach Taber sowie die Flecken- und Lösemittelbeständigkeit.

Um manuelle Kontrollen und den Produktionsausschuss auf ein vertretbares Minimum zu reduzieren, werden daher aktuelle Prozessparameter, wie z. B. der Energieeintrag, bis zu 30 % erhöht und die Gesamtanlage bzw. der Prozess entsprechend überdimensioniert, so dass die geforderte Oberflächen- und Tiefentrocknung ohne Zwischenkontrolle sichergestellt werden kann. Weiter erfordert die Dosierung der für die Härtung in unterschiedlichen Lacktiefen zuständigen UV-A, -B und -C Anteile in Zusammenspiel mit der individuellen Auftragsdicke, Pigmentierung, Fotoinitiatoranteilen, Reflexionseigenschaften usw. der zu verarbeitenden Farb- und Lacksysteme beim Anfahren wie im laufenden Druck bzw. Lackierprozess viel Zeit und Erfahrung sowie regelmäßige manuelle Kontrollen, um Produktionsstillstände und Ausschuss zu vermeiden.

Speziell bei den in Industrieanwendungen üblichen hohen Prozessgeschwindigkeiten genügt die aktuelle, manuelle Stichprobenkontrolle der Vernetzung nicht den industriellen Anforderungen. Außerdem ist die zur Zeit praktizierte Überdimensionierung von Anlagen und Prozessen weder ökonomisch noch ökologisch sinnvoll. Es werden daher Verfahren und Sensoren gefordert, die relevante Qualitätskriterien und Produktmerkmale bereits im Fertigungsprozess kontinuierlich erfassen, überwachen und bei Bedarf einer übergeordneten Steuerung für die Korrektur bzw. Prozessoptimierung zur Verfügung stellen.

Stand der Technik sind Verfahren, bei denen einzelne Stichproben aus der Produktionslinie manuell entnommen und anschließend untersucht werden. Diese Verfahren sind zeitaufwendig und liefern subjektive, vom Prüfer beeinflussbare Ergebnisse mit eingeschränkter Reproduzierbarkeit. Die Ergebnisse erlauben ausschließlich Aussagen über die Oberflächeneigenschaften von Farb- bzw. Lackschichten. Qualitative oder quantitative Aussagen zum Umwandlungsgrad im Lackvolumen können mit dem genannten Verfahren nicht präzise gemacht werden.

Zur quantitativen Bestimmung des Umwandlungsgrads von Monomeren zu Polymeren in Farb- bzw. Lackschichten sind zeit- und kostenaufwendige, nur im Labor einsetzbare Messverfahren verfügbar. So werden die FTIR-Spektroskopie und ATR-Messung vorwiegend zur wissenschaftlichen Analyse der Vernetzung von Lackschichten bzw. Oberflächen angewandt. Die FTIR-Raman-Spektroskopie sowie die konfokale Raman-Spektroskopie sind nur an Lacken mit geringer Absorption im Messwellenlängenbereich anwendbar und erfordern intensive Laser.

Dies hat zur Folge, dass in Lackier- und Druckbetrieben die Durchhärtung von getrockneten Lack- und Farbschichten bislang ausnahmslos indirekt bestimmt wird.

Ausgehend hiervon liegt der Erfindung die Aufgabe zugrunde, ein Verfahren zu entwickeln, das berührungslos die Eigenschaft eines Gegenstands bestimmen kann.

Diese Aufgabe wird gelöst durch ein Verfahren mit den Merkmalen des Anspruchs 1. Es wird weiterhin eine Messeinrichtung gemäß Anspruch 12 vorgestellt. Ausführungen ergeben sich aus den abhängigen Ansprüchen und der Beschreibung.

Das vorgestellte Verfahren dient zum berührungslosen Bestimmen einer Eigenschaft eines Gegenstands, bei dem ein Anregungsstrahl auf den Gegenstand projiziert wird und durch den Anregungsstrahl erzeugtes Licht, bspw. Streulicht, über einen Strahlteiler räumlich selektiv erfasst wird.

Mit dem Verfahren kann eine Eigenschaft der Oberfläche des Gegenstands und/oder eine Eigenschaft des Volumens des Gegenstands bestimmt werden.

Als Strahlteiler kann ein Streulichtfilter oder auch ein Interferenzfilter dienen. In einer Ausführung wird als Streulichtfilter ein Lochspiegel verwendet.

Es kann weiterhin vorgesehen sein, dass bei dem Verfahren die Eigenschaft basierend auf einer Transflexion bestimmt wird.

Das vorgestellte Verfahren dient in Ausgestaltung zum berührungslosen Bestimmen einer Eigenschaft eines Gegenstands, bspw. einer Schicht, bei dem der Gegenstand mit einem Anregungsstrahl bei verschiedenen Wellenlängen mittels Transflexion abgetastet wird, wobei bei einer ersten Wellenlänge ein von der Eigenschaft abhängiges Nutzsignal und bei mindestens einer weiteren Wellenlänge ein von der Eigenschaft im wesentlichen unabhängiges Referenzsignal für eine Korrektur des Nutzsignals erfasst wird.

In einer weiteren Ausgestaltung des Verfahrens ist vorgesehen, dass zwei Referenzsignale erfasst werden und mit den beiden Referenzsignalen eine Grundlinienkorrektur vorgenommen wird.

Die Grundlinie kann als Gerade im Spektralverlauf durch die beiden Referenzsignale bestimmt werden. Das Nutzsignal kann mit einem Ordinatenwert der Geraden bei der Wellenlänge des Nutzsignals korrigiert werden.

Das Verfahren ist vielseitig einsetzbar, so kann dieses zur Bestimmung einer Änderung der Eigenschaft der Schicht oder zur Härtungsprüfung eingesetzt werden.

Die Schicht kann punkt-, linien- oder zonenweise abgetastet werden. Insbesondere kann auch intermittierend abgetastet werden.

Die Messeinrichtung dient zum berührungslosen Bestimmen einer Eigenschaft einer Schicht und ist insbesondere zur Durchführung des vorstehend beschriebenen Verfahrens geeignet. Die Messeinrichtung umfasst eine Kontrolleinheit zur Bereitstellung mindestens eines Anregungsstrahls und zum Auswerten von räumlich selektiv erfasstem Licht, bspw. Streulicht. Die Messeinrichtung umfasst weiterhin eine Detektionseinrichtung, die bspw. einen Detektorkopf aufweist.

In Ausgestaltung weist die Kontrolleinheit eine Lock-in-Einheit zur Durchführung eines Lock-in-Verfahrens auf.

Unter einem Lock-in-Verfahren ist ein Verfahren zu verstehen, bei dem ein Anregungssignal mittels eines Modulationssignals moduliert wird, mit dem modulierten Anregungssignal die Messung bzw. Detektion durchgeführt und das ermittelte Messsignal abschließend demoduliert wird.

Weiterhin kann die Kontrolleinheit eine Anzahl von Strahlquellen, bspw. Laserlichtquellen, aufweisen.

Das Verfahren dient insbesondere für eine kontinuierliche Online-Kontrolle der Durchhärtung sowie der Qualitätsparameter von Farben und Lacken direkt im industriellen Druck- bzw. Lackierprozess. Zumindest in Ausgestaltungen der Erfindung ist es auch möglich, eine chemische Reaktion in der Schicht und insbesondere auch Änderungen der Eigenschaft zu bestimmen.

Durch Abstimmung der Wellenlänge auf charakteristische chemische Bindungen von UV- und thermisch härtenden Beschichtungen, die sich während des Trocknungsprozesses ändern, können sehr präzise Aussagen aus dem Messsignal abgeleitet werden. Die Ergebnisverwertung kann in industriellen Anwendungen erfolgen.

Der in der Messeinrichtung in Ausgestaltung vorgesehene Detektorkopf ist u.a. für ein sogenanntes Transflexionsverfahren geeignet. Unter einer Transflexion versteht man eine Kombination aus Reflexion und Transmission, d. h. das Licht wird erst durch die Probe transmittiert und vom Substrat reflektiert und durchdringt die Probe zweimal, auf dem Hin- und Rückweg. Zu beachten ist, dass bei beiden Durchgängen Streulicht sowohl am Lack als auch am Substrat entstehen kann.

Das genutzte Transflexionsmessprinzip basiert auf einem monochromatischen Lichtstrahl, der bei Durchdringen der zu analysierenden Lackschicht durch Absorption und Reflexion/Streuung abgeschwächt und auf einen Empfänger projiziert wird.

Das vorgestellte Verfahren beruht bei dieser Ausführung auf der Entwicklung eines kombinierten Transmissionsreflexionsverfahrens. Bei diesem als Transflexionsverfahren bezeichneten Messprinzip trifft die z. B. von einem Laser emittierte IR-Strahlung auf die zu untersuchende, vorab auf ein Substrat aufgetragene Farb- oder Lackschicht. Ein Teil der IR-Strahlung wird an der Phasengrenze Luft/Lack reflektiert. Die verbleibende IR-Strahlung durchdringt die Lackschicht, wird am Substrat reflektiert/gestreut und durchdringt auf dem Weg an die Lackoberfläche ein zweites Mal das Lackvolumen, bevor sie an der Grenzfläche Lack/Luft wieder in die Atmosphäre austritt und auf den Empfänger trifft. Auf dem Weg durch die Lackschicht wird die IR-Strahlung durch Streuung und Absorption abgeschwächt.

Die Funktionsweise wird nachstehend erläutert: Ein für die Vernetzung von UV-Lacken, wie z.B. Acrylatlacken, charakteristisches Merkmal ist die Zahl der C=C-Doppelbindungen in der flüssigen, aus Monomeren bestehenden Lackphase. Mit durch UV-Strahlung aktivierten Photoinitiatoren werden die in der flüssigen Lackphase vorhandenen C=C-Doppelbindungen gebrochen und eine Polymerisationsreaktion in Gang gesetzt. Durch diese Polymerisation werden die einzelnen Monomere zu langkettigen Polymeren verknüpft. Während dieser durch UV-Bestrahlung ausgelösten Vernetzung verfestigt der Lack zunehmend, bis er nahezu vollständig ausgehärtet ist. In einem nahezu vollständig ausgehärteten Lack sollten damit ein Großteil der Monomere mit C=C-Doppelbindungen gebrochen und zu langkettigen Polymeren vernetzt sein. Damit bietet die Messung von in der untersuchten Lackschicht vorhanden C=C-Doppelbindung eine Grundlage für die im Projekt geplante Online-Messung der Vernetzung in industriellen Trocknungs- bzw. Vernetzungsprozessen.

Aufgrund der Vernetzung und der damit verbundenen Absorptionseigenschaften ändert sich die Intensität des transflektierten/reflektierten/gestreuten Lichts. Diese Änderung der Absorptionseigenschaften bzw. der Intensität kann gemessen werden.

Das Verfahren kann u. a. auf einer Streuung, Reflexion, Transflexion, Fluoreszenz, Phosphoreszenz, Absorption und/oder Transmission beruhen.

Der Detektorkopf, der auch als Curing-Online-Sensor-Kopf bezeichnet wird, wird in einer sogenannten Curing-Online-Messeinrichtung verwendet, mit der das vorgestellte Transflexionsverfahren ausgeführt wird.

Es wird somit ein bspw. laserbasiertes Transflexionsverfahren vorgestellt, das eine kontinuierliche quantitative Messung der Vernetzung von UV- und thermisch härtenden Farben, Lacken, Klebstoffen und Silikonen direkt im industriellen Fertigungsprozess durchführt und damit eine Online-Kontrolle und direkte Steuerung bzw. Regelung von vernetzungsrelevanten Parametern im Produktionsprozess ermöglicht. Das Transflexionsverfahren arbeitet dabei berührungslos, so dass die zu prüfenden, berührungslos empfindlichen Schichten nicht durch die Messung beschädigt werden. Die Messungen können in Echtzeit mit einer Abtastrate von < 1 ms erfolgen, damit das auf dem Transflexionsverfahren basierende Curing-Online-Sensorsystem ohne Reduzierung der Taktrate in industrielle Fertigungsprozess integriert werden kann. Aus der Messung der Vernetzung können weitere spezifische Kenngrößen zur Charakterisierung von Farb- und Lackoberflächen bzw. -schichten, wie bspw. Härte, Kratzfestigkeit, Haftung, chemische Beständigkeit usw., im laufenden Produktionsprozess aus den Messsignalen abgeleitet und mit hinterlegten Qualitätsmerkmalen verglichen werden.

Somit gelingt es, durch Einsatz von Online-Messverfahren zusätzliche qualitätsrelevante Oberflächen bzw. Vernetzungsparameter von UV- und thermisch härtbaren Farben, Lacken, Klebstoffen oder Silikonen zu bestimmen. Daher kann der Einsatzbereich für das Curing-Online-Sensorsystem in industriellen Anwendungen zusätzlich deutlich reduziert werden.

Weiterhin kann eine applikationsspezifische Anpassung sowie die daten- und störungstechnische Integration des Curing-Online-Sensorsystems in verschiedenen industriellen Anwendungen vorgenommen werden. Der Detektorkopf kann für den Einsatz in der Drucktechnik, in unterschiedlichen Automotive-Anwendungen (UV- und thermisch härtende Lacksysteme) sowie für die industrielle Fertigung von Kontaktlinsen entwickelt und in geeigneten Feldversuchsumgebungen verifiziert werden.

Es ist festzuhalten, dass ein berührungslos messendes optisches Verfahren für die kontinuierliche zeitaufgelöste Online-Kontrolle der Vernetzung von Lacken, Farben, Klebstoffen, Silikonwerkstoffen usw. für industrielle Anwendungen zur Verfügung steht. Dabei können bspw. industrielle Druck- und Lackierprozesse wesentlich schneller und mit deutlich reduziertem Ausschuss angefahren und ausgeführt werden. Weiter wird die Reproduzierbarkeit von Lackier- und Trocknungsprozessen erhöht, die unabhängig von veränderlichen Umgebungsbedingungen, wie bspw. Alter der UV-Strahler, schwankenden Lack- oder Farbeigenschaften usw., abhängt. Ebenso ermöglicht die Online-Überwachung eine Reduzierung von Energie und Materialverbrauch von mehr als 10 % sowie eine gezielte Vorgabe, Kontrolle und Reproduktion von Eigenschaften, wie bspw. Vernetzungsgrad, Oberflächenhärte oder Haftung der Farben bzw. Lacke am Untergrund.

Der verwendete Detektorkopf ist insbesondere frei von elektronischen Bauteilen, wie bspw. einer Photodiode zur Detektion des Lichts oder einem Photodiodenverstärker. Weiterhin ist ein robuster Aufbau möglich. Es kann ein massives Aluminiumgehäuse verwendet werden, bei dem keine Temperaturprobleme vorliegen, d.h. es ist keine Kühlung erforderlich, da die Wärme abgebende Lichtquelle und die temperaturempfindliche Photodiode außerhalb liegen. Der Detektorkopf ist weiterhin erschütterungsunempfindlich. Es liegt ein starrer opto-mechanischer Aufbau ohne bewegliche Teile vor. Es ist ebenfalls ein kompakter Aufbau möglich.

Aufgrund des beliebig langen Kommunikationsabstands zwischen Kopf und Kontrolleinheit ergeben sich vielfältige Anwendungen. Weiterhin wird eine effiziente Lichtausbeute ermöglicht, hierzu dient insbesondere der bspw. in dem Detektorkopf vorgesehene spezielle Lochspiegel als Streulichtfilter/Oberflächenreflexfilter. Darüber hinaus ist der Detektorkopf nahezu abstandsunempfindlich, wenn es sich um ein relatives Messverfahren mit Signal- und Referenzquelle bzw. -laser handelt, Hierbei ist die absolute Intensität irrelevant.

Es ist des weiteren ein konfokales Messverfahren möglich, d.h. der Hin- und der Rückweg des Lichtpfads befinden sich auf der gleichen Achse. Das zur Detektion genutzte Licht stammt aus der Region, die mit der Lichtquelle bestrahlt wird. Durch die überwiegende Verwendung von Standardkomponenten ist ein kostengünstiger Aufbau möglich. Dies wird durch die einfache Herstellung unterstützt. Diese umfasst lediglich ein Zusammensetzen von mechanischen und optischen Bauteilen, eine komplexe Montage ist nicht erforderlich. Es ist hingegen nur eine Einmaljustage erforderlich, im Betrieb ist keine Nachjustage mehr erforderlich.

Das vorgestellte Verfahren kann auch zur Messung von Oberflächeneigenschaften und Volumeneigenschaften, geometrisch und spektral, verwendet werden. Damit erweitert sich die Anwendung auf zahlreiche weitere Felder, wie bspw.:
Detektion der Anreicherung oder Abreicherung von (Makro-) Molekülen, z.B. in der molekularen Diagnostik,
Messung von Fluoreszenz oder Phosphoreszenz
Oberflächenkontrolle von Gegenständen (Politur/Spiegel, Gleichmäßigkeit, Schäden, Macken, Verschmutzung, ...), Oberflächenformabtastung von dreidimensionalen Gegenständen (Stanzung, Prägung, Schweißnahtoberfläche, ...),
Qualitätskontrolle,
Prozesskontrolle.

Grundsätzlich ist das vorgestellte Verfahren anwendbar, wenn Streuverhalten, Fluoreszenz, Phosphoreszenz, Absorption, Transmission eines Gegenstands auf eine interessierende Eigenschaft schließen lässt.

Der vorgesehene Detektorkopf kann mit einer oder mehreren zusätzlichen Quellen, bspw. mit zwei oder mehreren zusätzlichen fasergekoppelten Laserlichtquellen, unterschiedlicher Wellenlänge ausgestattet werden. Grundsätzlich ist das Verfahren jedoch mit einer Quelle durchführbar. Damit lassen sich Informationen über das Absorptionsspektrum oder Streuverhalten der Probe gewinnen. Dadurch ergibt sich auch die Möglichkeit, zusätzlich zur quantitativen und qualitativen Veränderung der Probe, deren chemischen Eigenschaften und deren Änderung zu detektieren, bspw. die qualitative Erkennung von Molekülen in der molekularen Diagnostik.

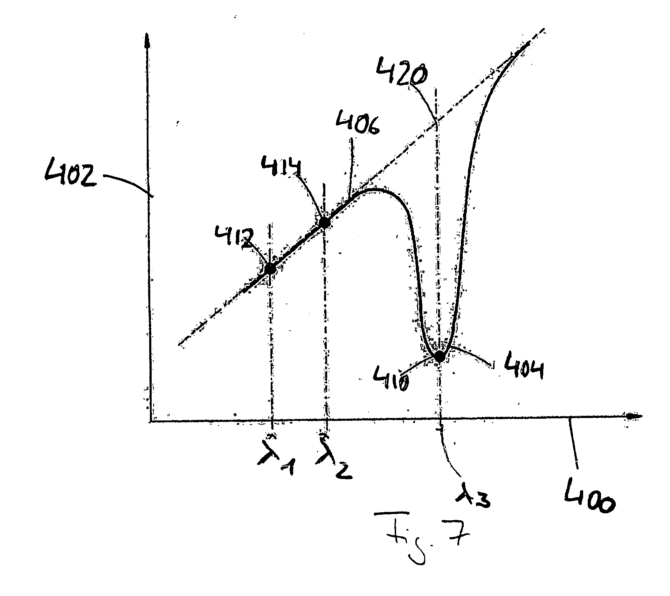

Nachstehend sind einige Ausführungsbeispiele mit Anwendungsmöglichkeiten genannt:
1. Eine Laserlichtquelle: Messen der Intensität, bspw. des Streulichts, relativ zur vorangehenden Messung oder zur Masterprobe bzw. dynamisch.
2. Zwei oder mehrere Laser: Durch Bilden der Quotienten der Intensitäten ist die Messung spektral relativ. Eine Veränderung einer Wellenlänge gegenüber einer weiteren Wellenlänge wird detektiert.
3. Mindestens drei Laser: Bei zweien der mindestens drei Wellenlängen kann ein fiktiver spektraler Referenzpunkt berechnet werden, der relativ zur Intensität der dritten Wellenlänge steht, womit eine absolute Messung ermöglicht wird (siehe Figur 7).
4. Unter Fixierung aller Intensität beeinflussenden Parameter kann absolut gemessen werden.
5. Durch inkrementelles oder alternierendes Messen von Substrat mit Probe und Substrat ohne Probe können Schwankungen im Messsystem ausgeglichen werden.

In einer weiteren Ausführung sind drei intensitätsmodulierte Laserlichtquellen vorgesehen, deren Detektion über eine Photodiode, bspw. eine InGaAs-Photodiode, und Signaltrennung mit einem Lock-in-Verfahren erfolgt. Man kann selbstverständlich auch optisch trennen.

Eine weitere Ausführung des Verfahrens verwendet in dem Detektorkopf einen optischen Filter zwischen der Linse und dem Kollimator, d.h. der Auskopplung des Messstrahls. Diese Ausführungsform kann zur Detektion von optisch angeregter Fluoreszenz oder Phosphoreszenz verwendet werden. Bei Fluoreszenz und Phosphoreszenz kann anstelle eines Lochspiegels auch ein Strahlteiler eingesetzt werden.

Es wird somit ein Verfahren beschrieben, das die Messung von transflexionsbedingtem oder auf andere Weise entstandenem Streulicht entsprechender Proben ermöglicht.

Ferner wird ein Verfahren zur relativen Messung der Lichtintensität, mit dessen Hilfe die Signalauswertung unabhängig von den absoluten Lichtintensitätswerten erfolgen kann, beschrieben. Die Erfindung umfasst ferner Ausführungsformen und Verfahren, die neben der Messung von Streulichteigenschaften auch die Messung von spektralen Eigenschaften einer Probe erlauben.

Der Detektorkopf wurde zur Verfolgung und Messung des Aushärteprozesses von Lacken entwickelt, nach dem Prinzip der Transflexionsmessung des Streulichts. Hierbei wird ausgenutzt, dass die Intensität des Streulichts sich mit der Änderung der Zahl der vernetzten Polymermoleküle ändert. Die Bauweise des Detektorkopfs erlaubt den Einsatz des Verfahrens im Umfeld von industrieller Produktion und Qualitätssicherung oder in der Prozessüberwachung.

Zum Erzeugen des Anregungsstrahls für das Verfahren zum berührungslosen Bestimmen kann ein Verfahren zum Bereitstellen einer Anzahl von modulierten Anregungssignalen eingesetzt werden, bei dem jedem der Anregungssignale ein periodisches Modulationssignal zugeordnet wird, wobei die Frequenzen der Modulationssignale unterschiedlich sind und keine der Frequenzen ein ganzzahliges Vielfaches einer der anderen Frequenzen ist, und bei dem mit jedem der Modulationssignale jeweils eine Quelle angeregt wird, so dass jede Quelle ein mit dem zugeordneten Modulationssignal moduliertes Anregungssignal ausgibt.

Dabei kann jeweils eine Amplitudenmodulation oder eine Frequenzmodulation vorgenommen werden. Die Modulationssignale können zueinander synchronisiert werden. Mit den Modulationssignalen wird jeweils eine Lichtquelle, bspw. eine Laserlichtquelle, angeregt.

Die erzeugten modulierten Anregungssignale werden dann zu einem Anregungsstrahl zusammengefasst.

In einem sogenannten Lock-in-Verfahren wird dann neben der zuvor beschriebenen Modulation zusätzlich eine Detektion und eine Demodulation durchgeführt. Als Detektion wird dabei das Verfahren eingesetzt, das Gegenstand der vorliegenden Anmeldung ist. Das Lock-in-Verfahren dient u.a. zur Reduzierung von Umwelteinflüssen.

In Ausgestaltung wird bei der Demodulation auf bei der Modulation verwendete Größen zurückgegriffen.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Figur 1: verdeutlicht in einer schematischen Darstellung das Transflexionsmessprinzip.
- Figur 2: zeigt eine Ausführungsform des beschriebenen Detektorkopfs in einer vereinfachten Darstellung.
- Figur 3: verdeutlicht die Messung mit einem Lochspiegel.
- Figur 4: verdeutlicht ein alternatives Messprinzip mit einem Strahlteiler.
- Figur 5: zeigt die Messung bei einem alternativen Aufbau.
- Figur 6: zeigt eine Ausführung der beschriebenen Messeinrichtung.
- Figur 7: verdeutlicht in einem Graphen das beschriebene Verfahren.

Die Erfindung ist anhand von Ausführungsformen in der Zeichnung schematisch dargestellt und wird nachfolgend unter Bezugnahme auf die Zeichnung ausführlich beschrieben.

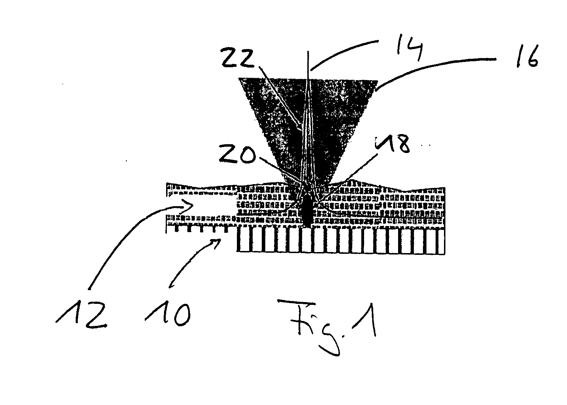

Figur 1 verdeutlicht das Transflexionsmessprinzip. Die Darstellung zeigt ein Substrat 10, auf dem eine Probe 12 als Oberflächenschicht aufgebracht ist. Die Probe 12 besteht bspw. aus einem transparenten, Makromoleküle enthaltenden Material, z.B. einem Acrylat, das auf dem Substrat 10, bspw. Glas, Kunststoff, Metall, aufgebracht ist. Licht 14 einer Laserquelle durchdringt die Probe 12, wird am Substrat 10 reflektiert oder gestreut und durchdringt die Probe 12 ein zweites Mal. Dies wird als Transflexion bezeichnet. Bei beiden Durchgängen findet eine Interaktion des Lichts mit den Makromolekülen statt, bspw. Streuung, Absorption. Aus der Intensität des transflektierten Lichts 16 (Absorptionssignal) lassen sich Rückschlüsse auf deren Zusammensetzung (Absorptionsbanden) und relative Menge (Streuquerschnitt) ziehen. Es lässt sich damit bspw. der Bildungsprozess von Makromolekülen (Polymerisation) verfolgen. Mit Bezugsziffer 18 ist diffuses reflektiertes Laserlicht bezeichnet. Mit Bezugsziffer 20 ist der Oberflächenreflex aufgrund des Luft-Proben-Übergangs bezeichnet. Bezugsziffer 22 veranschaulicht die Lichtintensitätsverteilung.

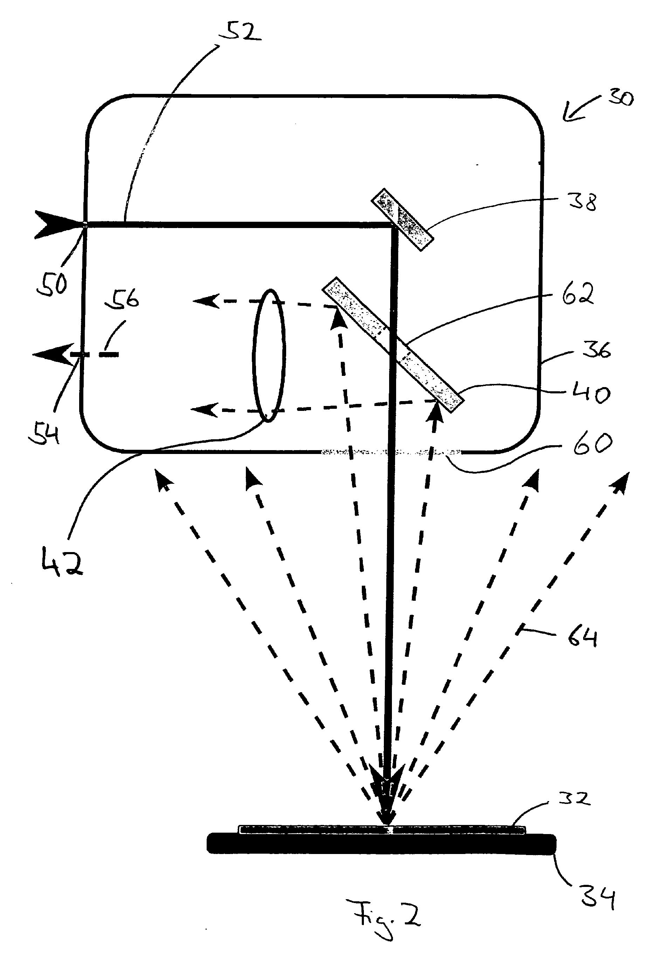

Figur 2 zeigt stark vereinfacht einen Detektorkopf 30, der zur Untersuchung einer Probe 32, die auf einem Substrat 34 aufgebracht ist, vorgesehen ist. Der Detektorkopf 30 umfasst ein Gehäuse 36, in dem ein Spiegel 38, ein Streulichtfilter 40, in diesem Fall ein Lochspiegel, und eine Linse 42 vorgesehen sind. Der Detektorkopf 30 umfasst somit nur optische und ggf. mechanische Komponenten, ist somit rein optisch bzw. opto-mechanisch aufgebaut.

Weiterhin weist das Gehäuse 36 einen ersten Koppler 50 zum Einkoppeln eines Anregungsstrahls 52 und einen zweiten Koppler 54 zum Auskoppeln eines Messstrahls 56, in diesem Fall Laserlicht, auf. Außerdem ist ein Fenster 60 zum Austreten des durch den Spiegel 38 umgeleiteten und durch ein Loch 62 in dem Streulichtfilter 40 getretenen Anregungsstrahls vorgesehen. Von der Probe 32 abgegebenes Streulicht 64 wird als Transflexionsstrahl bzw. -licht bezeichnet. Dieses gelangt wiederum durch das Fenster 60. Anstelle des Fensters 60 kann auch eine Linse vorgesehen sein. In diesem Fall kann die Linse 42 entfallen.

Durch das Loch 62 in dem Streulichtfilter 40 wird der Anregungsstrahl 52 vollständig durchgelassen. Das gestreute Transreflexionslicht wird von der Spiegelfläche des Streulichtfilters 40 in Richtung des Durchlasses 54 nahezu vollständig, d. h. räumlich selektiv, typischerweise 99%, reflektiert, während die von der Probe 32 kommende, gerichtete Reflexion (Oberflächenreflexion 20) hoher Intensität durch das Loch 62 in Richtung der Lichtquelle zurückgeführt wird und damit wunschgemäß nicht in den Detektionskanal, in dem der Messstrahl 56 verläuft, gelangt. Anschließend wird das reflektierte Streulicht einer Detektionsoptik zugeführt. Der Detektorkopf 30 stellt somit eine Kombination aus einem Oberflächenreflexfilter und einem selektiven Streulichtreflektor dar.

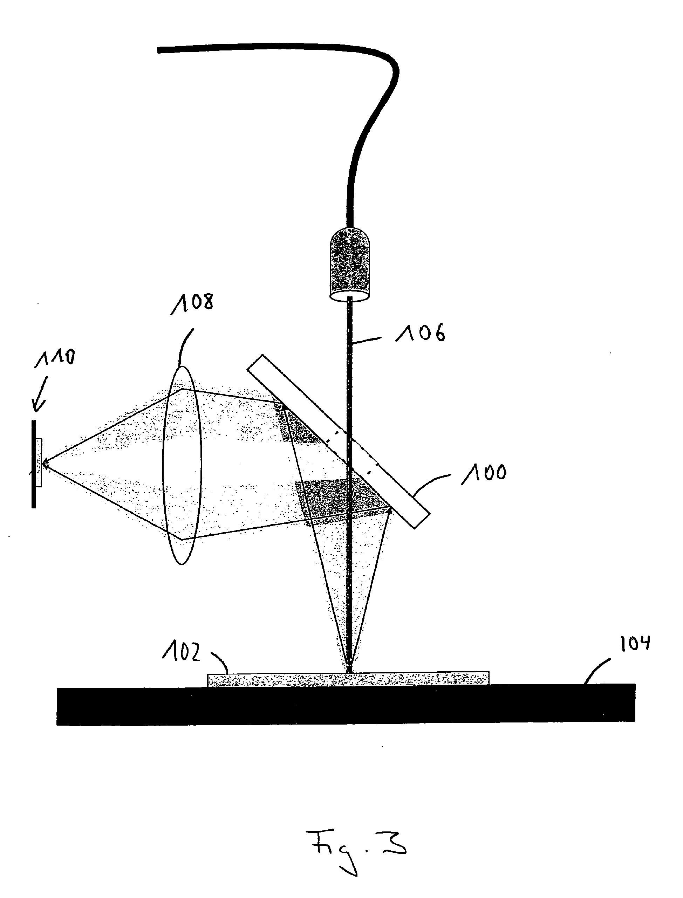

In Figur 3 ist das Messprinzip mit einem Lochspiegel 100 nochmals verdeutlicht. Die Darstellung zeigt eine Probe 102, ein Substrat 104, Laserlicht 106, eine Linse 108 und einen Detektor 110.

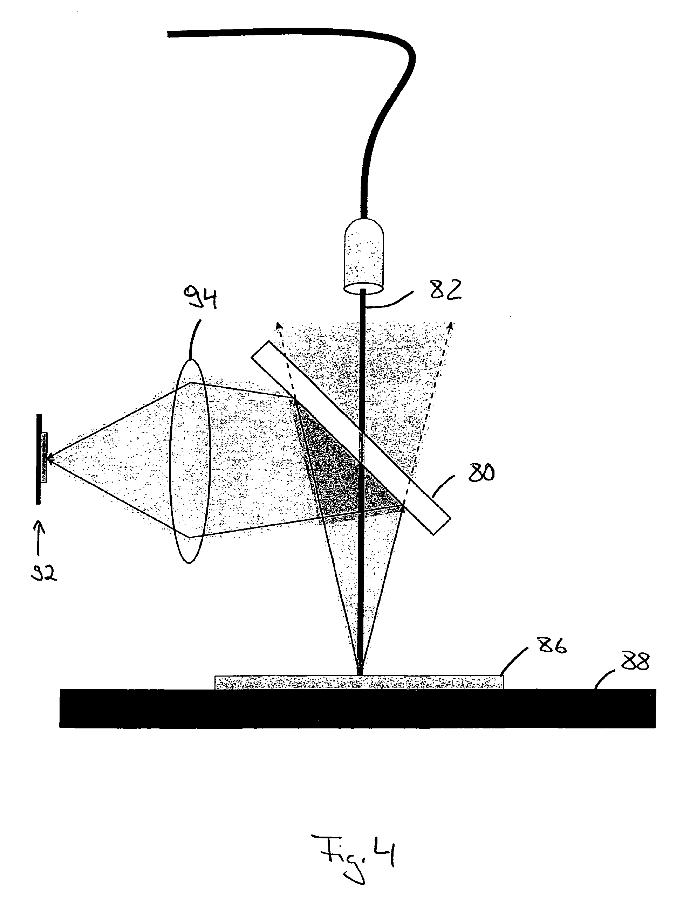

Figur 4 verdeutlicht ein alternatives Messprinzip, das mit dem beschriebenen Detektorkopf durchzuführen ist. Bei der gezeigten Ausführung ist die Verwendung eines Strahlteilers 80 unter z.B. 45° zusammen mit einem Laserstrahl 82 von Bedeutung. Der Laserstrahl 82 wird durch den Strahlteiler auf eine Probe 86, die auf einem Substrat 88 aufgebracht ist, projiziert. Das auf der Probe 86 entstandene Signal wird durch den Strahlteiler auf einen Detektor 92 mit einer Linse 94 projiziert.

Zu beachten ist, dass das Substrat 88 das Laserlicht 82 zusätzlich reflektiert bzw. streut. Die Probe 86 kann hierbei auch zur Streulichtdetektion das Substrat 88 darstellen.

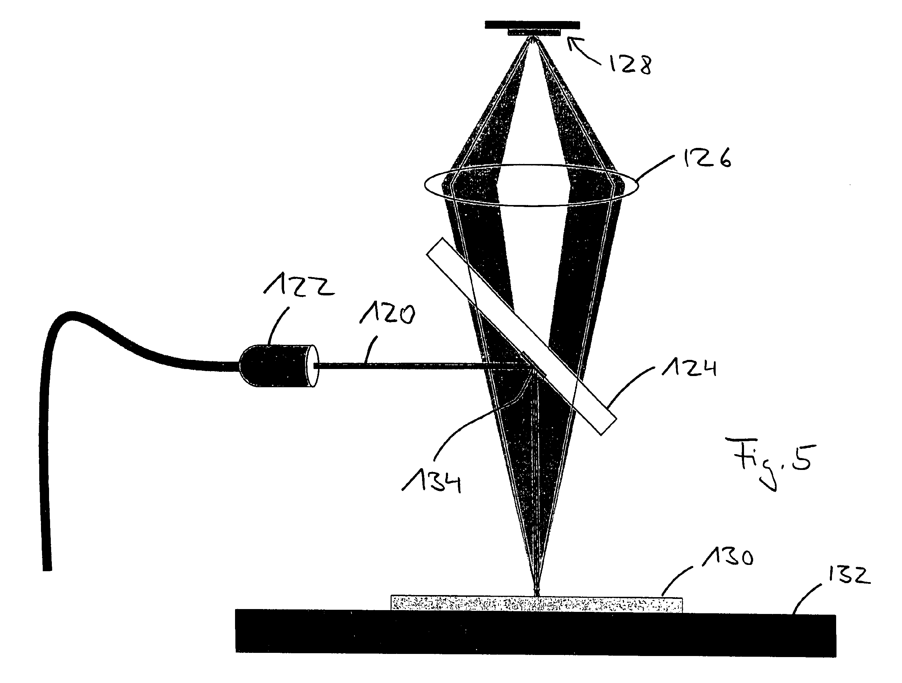

In Figur 5 ist ein alternativer Aufbau, der zur Messung dient und in Verbindung mit dem vorgestellten Detektorkopf zur Anwendung kommen kann, wiedergegeben. Die Darstellung zeigt Laserlicht 120 aus einer Quelle 122, ein Streulichtfilter 124, eine Linse 126, einen Detektor 128, eine Probe 130 und ein Substrat 132.

Das Streulichtfilter 124 umfasst einen mittig angeordneten Bereich 134, der reflektiert. Hierzu ist bspw. ein Spiegel geeignet. Die gesamte Region um diesen reflektierenden Bereich transmittiert das von der Probe 130 kommende Licht nahezu vollständig. So wird nur das auf direktem Wege von der Probe 130 reflektierte Licht durch den reflektierenden Bereich 134 zurück zur Quelle 122 zurückgeleitet. Das restliche Licht transmittiert durch das Streulichtfilter 124, wird von der Linse 126 gesammelt und auf den Detektor 128 projiziert.

Es kann selbstverständlich als Streulichtfilter 124 nur der reflektierende Bereich 134 bzw. ein Spiegel verwendet werden. Dieses Streulichtfilter 124 hat somit einen im Vergleich zur Ausführung in der Figur 3 verwendeten Lochspiegel 100 invertierten Aufbau.

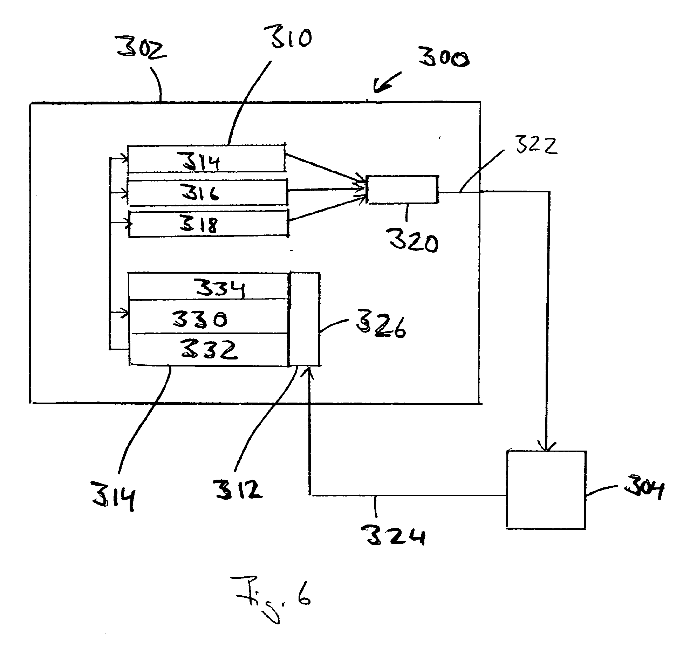

In Figur 6 ist eine Ausführung der Messeinrichtung zur Durchführung des Verfahrens wiedergegeben, die insgesamt mit der Bezugsziffer 300 bezeichnet ist. Diese Messeinrichtung 300 ermöglicht bspw. die Härtungsprüfung von Schichten. Hierfür sind bei der Messeinrichtung 300 eine berührungslos arbeitende Kontrolleinheit 302 und ein Detektorkopf 304 vorgesehen. Sämtliche elektrischen Komponenten sind in der Kontrolleinheit 302 angeordnet. Der Detektorkopf 304 ist rein optisch bzw. opto-mechanisch.

In der Kontrolleinheit 302 sind ein Lichtsender 310, ein Lichtempfänger 312 und eine nachgeschaltete Signalverarbeitungseinrichtung 314 vorgesehen. Bei dieser Ausführung ist der Lichtsender 310 durch drei Laserlichtquellen 314, 316, 318 gebildet, die bei verschiedenen Wellenlängen monochromatisch arbeiten und über einen Strahlenkombinierer 320 in einen gemeinsamen optischen Sendepfad 322 einkoppelbar sind. Dieser leitet einen Anregungsstrahl.

Der Lichtempfänger 312 wird über einen Empfangslichtleiter 324 mit einem Messstrahl beaufschlagt und erzeugt über einen Photodetektor 326 ein elektrisches Ausgangssignal, das in ein Lock-in-Modul 330 eingespeist wird. Das Lock-in-Modul 330 ist über einen Referenzeingang mit einem Frequenzgenerator 332 gekoppelt und ausgangsseitig an eine Prozessoreinheit 334 angeschlossen. Der Frequenzgenerator 332 ist ebenfalls mit dem Lichtsender 310 gekoppelt, um ein moduliertes Messsignal erzeugen zu können.

In Figur 7 ist ein typisches Absorptionsspektrum gezeigt, dabei ist an einer Abszisse 400 die Wellenlänge λ und an einer Ordinate 402 die Signalintensität I aufgetragen. Ein Absorptionsdip 404 wird von einer mit zunehmender Wellenlänge in diesem Beispiel ansteigenden Grundlinie 406 überlagert. Der Verlauf der Grundlinie 406 ist jedoch nicht allgemein definiert, sondern hängt vom jeweiligen Beschichtungssystem ab.

Das beschriebene Messverfahren, das nachstehend in Zusammenhang mit einer Härteprüfung beschrieben wird, bei der zu beachten ist, dass in einer "nassen" Schicht überwiegend C=C-Doppelbindungen vorhanden sind, beruht auf einer intrinsischen Kalibrierung durch eine gleichzeitige Messung bei einer für die Umsetzung der C=C-Doppelbindungen sensitiven Wellenlänge λ₃ im Bereich des Absorptionsdips 404 und bei zwei weiteren nicht sensitiven Wellenlängen λ₁ und λ₂ außerhalb des Bereichs. Es ist aber auch möglich, hintereinander zu messen.

Die Wellenlängen werden von den Laserlichtquellen 314, 316, 318 (Figur 6) gleichzeitig eingestrahlt, wobei aufgrund der Ansteuerung mittels des digitalen Frequenzgenerators 332 eine jeweils mit einer anderen Trägerfrequenz moduliert wird. Das Eingangssignal kann entsprechend durch das Lock-in-Modul mit einem in Frequenz und ggf. Phase bekannten Modulationssignal korreliert, bspw. multipliziert, werden, so dass das eigentliche Messband im Frequenzspektrum sehr schmalbandig ist und mit hohem Signal-Rausch-Verhältnis erfasst werden kann.

Es können somit ein Nutzsignal 410 selektiv bei der Wellenlänge λ₃ sowie zwei Referenzsignale 412 und 414 bei den Wellenlängen λ₁ und λ₂ bestimmt werden. Durch die beiden Referenzsignale 412 und 414 kann dann eine Grundlinienkorrektur des Nutzsignals 406 vorgenommen werden. Die Höhe des Nutzsignals 404 wird dann auf den Ordinatenwert 420 der Geraden bei der Wellenlänge λ₃ bezogen. Somit können unterschiedliche Steigungen der Grundlinie bedingt durch unterschiedliche Randbedingungen für eine genaue Nutzsignalkorrektur berücksichtigt werden.

## Patentansprüche

1. Verfahren zum berührungslosen Bestimmen einer Eigenschaft eines Gegenstands, bei dem ein Anregungsstrahl auf den Gegenstand projiziert wird und durch den Anregungsstrahl erzeugtes Licht über einen Strahlteiler räumlich selektiv erfasst wird.

2. Verfahren nach Anspruch 1, bei dem eine Eigenschaft der Oberfläche des Gegenstands bestimmt wird.

3. Verfahren nach Anspruch 1 oder 2, bei dem eine Eigenschaft des Volumens des Gegenstands bestimmt wird.

4. Verfahren nach einem der Ansprüche 1 bis 3, bei dem als Strahlteiler ein Streulichtfilter verwendet wird.

5. Verfahren nach Anspruch 4, bei dem als Streulichtfilter ein Lochspiegel verwendet wird.

6. Verfahren nach einem der Ansprüche 1 bis 3, bei dem als Strahlteiler ein Interferenzfilter verwendet wird.

7. Verfahren nach einem der Ansprüche 1 bis 6, bei dem die Eigenschaft basierend auf einer Transflexion bestimmt wird.

8. Verfahren nach einem der Ansprüche 1 bis 7, bei dem der Gegenstand mit einem Anregungsstrahl bei verschiedenen Wellenlängen abgetastet wird, wobei bei einer ersten Wellenlänge ein von der Eigenschaft abhängiges Nutzsignal und bei mindestens einer weiteren Wellenlänge ein von der Eigenschaft im wesentlichen unabhängiges Referenzsignal für eine Korrektur des Nutzsignals erfasst wird.

9. Verfahren nach Anspruch 8, bei dem zwei Referenzsignale erfasst werden und bei dem mit den beiden Referenzsignalen eine Grundlinienkorrektur vorgenommen wird.

10. Verfahren nach Anspruch 9, bei dem die Grundlinie als Gerade im Spektralverlauf durch die beiden Referenzsignale bestimmt wird und das Nutzsignal mit einem Ordinatenwert der Geraden bei der Wellenlänge des Nutzsignals korrigiert wird.

11. Verfahren nach einem der Ansprüche 1 bis 10, das zur Härtungsprüfung eingesetzt wird.

12. Messeinrichtung zum berührungslosen Bestimmen einer Eigenschaft einer Schicht, insbesondere zur Durchführung eines Verfahrens nach einem der Ansprüche 1 bis 11, mit einer Kontrolleinheit zur Bereitstellung mindestens eines Anregungsstrahls und zum Auswerten von räumlich selektiv erfasstem Licht und mit einer Detektionseinrichtung.

13. Messeinrichtung nach Anspruch 12, bei dem die Detektionseinrichtung einen Detektorkopf umfasst.

14. Messeinrichtung nach Anspruch 12 oder 13, bei dem die Kontrolleinheit zum Ausführen eines Lock-in-Verfahrens ausgebildet ist und zur Modulation und Demodulation geeignet ist.

15. Messeinrichtung nach einem der Ansprüche 12 bis 14, bei dem die Kontrolleinheit eine Anzahl von Laserlichtquellen aufweist.
